# DEMANDE DE BREVET EUROPEEN

(11) **EP 0 740 176 A1**
(43) Date de publication de la demande: **30.10.1996**
(21) Numéro de dépôt: 96400843.7
(22) Date de dépôt: 19.04.1996
(51) Int. Cl.: G02B 6/44

(54) **Procédé de caractérisation d'un câble par des informations de marquage, et câble de garde avec information de marquage**

(30) Priorité: 25.04.1995 FR 9504919
(71) Demandeur: ALCATEL CABLE, F-92100 Clichy (FR)
(72) Inventeur: Bonicel, Jean-Pierre, 92500 Rueil Malmaison (FR); Tatat, Olivier, 78800 Houilles (FR)
(74) Mandataire: Buffiere, Michelle

(57) **Abrégé**

La présente invention concerne un procédé de caractérisation d'un câble par des informations de marquage, **caractérisé par** une inscription desdites informations sur une portion de surface d'un élément du câble qui est intérieure à une enveloppe extérieure (10) constitutive dudit câble, lors de la fabrication dudit câble, de sorte à protéger lesdites informations ainsi inscrites contre l'environnement extérieur.

Elle s'applique en particulier à la caractérisation des câbles de garde optique.

## Description

La présente invention concerne de manière générale le marquage des câbles, tels que des câbles aériens à fibres optiques appelés câbles de garde optique.

Les câbles de garde optique sont aujourd'hui très largement utilisés dans les réseaux de distribution électrique à haute tension pour des applications de télésurveillance, téléconduite ou télécommunications. Ces câbles de garde optique utilisent comme support des pylônes du réseau de transport électrique. Ils sont donc sujets aux conditions climatiques extérieures, parfois rigoureuses, de la zone géographique dans laquelle ils sont installés.

Parallèlement à cela, il existe aujourd'hui une demande de plus en plus forte des utilisateurs de ces câbles, tels que compagnies d'énergie électrique, auprès des fabriquants, de marquer chaque câble livré par des informations d'identification de câble, dites de traçabilité. Ces informations définissent des caractéristiques du câble, telles que référence du câble, identité du fournisseur, usine de fabrication, date de fabrication, etc.... Elles sont alors utilisées par exemple pour assurer un suivi en qualité d'un câble après son installation et permettre de reconstituer l'historique du câble notamment dès lors qu'un problème est identifié sur ce câble. Ces informations de marquage peuvent également porter des données de mesure métrique du câble très utiles lors de la fabrication du câble, lors de son installation et lors de sa maintenance. Ainsi, par exemple, après installation du câble, un technicien opérant sur site peut connaître une longueur de câble entre deux extrémités données en relevant uniquement les données de mesure métrique à ces deux extrémités et en comparant ces données.

Selon l'art antérieur, trois techniques générales sont utilisées pour le marquage des câbles, à savoir :
- le marquage en surface, par exemple par jet d'encre, sur la gaine extérieure du câble,
- le marquage par gravure sur la gaine extérieure du câble, et
- le marquage sur une plaquette inscriptible qui est fixée, par exemple par collier, autour du câble.

Toutes ces techniques présentent des inconvénients pour des câbles aériens, de type câbles de garde optique, sujets à des conditions climatiques extrêmes. La technique de marquage en surface ne garantit pas une fixation suffisante des informations d'identification, et un effacement progressif de ces informations se produit, interdisant toute utilisation de ces informations quelques mois ou années après que le câble soit installé. La technique de marquage par gravure ne peut être appliquée à des câbles de garde optique dont l'enveloppe extérieure est constituée de fils de métal ou alliage de métaux. Le marquage sur plaquette inscriptible présente des inconvénients évidents de coût et de mise en oeuvre pratique dus au fait qu'une même information de marquage doit être inscrite à intervalles réguliers sur toute la longueur du câble, en des points relativement faiblement espacés entre eux. De plus, l'utilisation de ces plaquette rend possible des erreurs d'identification du câble en résultat d'une erreur sur le choix des plaquettes à utiliser.

L'invention vise donc à remédier aux inconvénients précités en fournissant un procédé de caractérisation d'un câble par des informations de marquage qui permet de porter sur ce câbles des informations qui ne s'effacent pas aisément, et n'implique pas un coût élevé pour son inscription.

La présente invention propose à cet effet un procédé de caractérisation d'un câble par des informations de marquage, caractérisé par une inscription desdites informations sur une portion de surface d'un élément du câble qui est intérieure à une enveloppe extérieure (10) constitutive dudit câble, lors de la fabrication dudit câble, de sorte à protéger lesdites informations ainsi inscrites contre l'environnement extérieur.

Un câble de garde optique comprenant une âme optique, et dont l'enveloppe extérieure est une couche d'armure métallique, et portant une information de marquage destinée à indiquer des caractéristiques du câble, est caractérisé selon l'invention en ce que l'information de marquage est inscrite sur une portion de surface d'un élément du câble qui est intérieure à son enveloppe extérieure.

Avantageusement, l'information de marquage est inscrite sur une portion de surface d'un élément faisant partie de l'âme optique.

Pour un câble comprenant une âme optique à structure à jonc rainuré, l'information de marquage peut être inscrite sur la surface du jonc rainuré, par exemple dans une rainure.

Pour un câble comprenant une âme optique à structure multitube sous la forme d'un tube de maintien incluant une pluralité de tubes câblés renfermant chacun un groupe respectif de fibres optiques, l'information de marquage peut être inscrite sur la surface d'au moins l'un de ces tubes câblés. L'information de marquage peut selon une variante être inscrite sur la surface intérieure ou extérieure du tube de maintien.

Pour un câble comprenant une âme optique à structure monotube sous la forme d'un tube renfermant un groupe de fibres optiques, l'information de marquage peut être inscrite sur la surface intérieure ou extérieure du tube de maintien.

Pour un câble comprenant une âme optique à structure à jonc rainuré avec tubes câblés, sous la forme d'un jonc rainuré dans des rainures duquel sont disposés des tubes câblés renfermant chacun un groupe respectif de fibres optiques, l'information de marquage peut être inscrite sur la surface du jonc. Elle peut également être inscrite sur la surface d'au moins l'un des tubes câblés.

En variante de tout ce qui précède, dans le cas où le câble de garde optique comprend au moins deux couches d'armure métallique, l'information de marquage peut être inscrite sur la surface d'une desdites couches d'armure qui est intérieure à la couche d'armure formant l'enveloppe extérieure.

Typiquement, l'information de marquage est inscrite par jet d'encre, ou bien sous forme directement lisible ou bien sous forme codée.

L'invention fournit également un procédé de marquage d'un câble de garde optique lors de sa fabrication, lorsqu'il est prévu d'inscrire l'information de marquage sur un jonc rainuré de l'âme optique dans le câble. Le procédé est caractérisé par les étapes de :
- traction en rotation, le long d'une ligne de défilement, d'un jonc rainuré droit afin de vriller ledit jonc rainuré droit en ledit jonc rainuré en hélice,
- blocage en rotation dudit jonc rainuré droit en un point donné de ladite ligne de défilement qui est distant d'un point d'alimentation du jonc rainuré droit, et
- inscription d'une information de marquage au jet d'encre sur la surface dudit jonc rainuré droit en un point d'inscription compris entre ledit point donné et ledit point d'alimentation.

D'autres caractéristiques et avantages de la présente invention apparaîtront plus clairement à la lecture de la description suivante, en référence aux dessins annexés correspondants, dans lesquels :
- les figures 1, 2, 3 et 4 montrent respectivement, en coupe transversale, quatre structures de câble de garde optique connues selon la technique antérieure;
- la figure 5 montre en perspective une portion d'un tube, formant partie de l'âme optique d'un câble de garde, sur lequel est inscrite une information de marquage;
- la figure 6 montre en perspective une portion d'un jonc rainuré, formant partie de l'âme optique d'un câble de garde, sur lequel est inscrite une information de marquage; et
- la figure 7 est un bloc diagramme schématique d'un système de marquage de câble pour la mise en oeuvre d'un procédé de marquage selon l'invention.

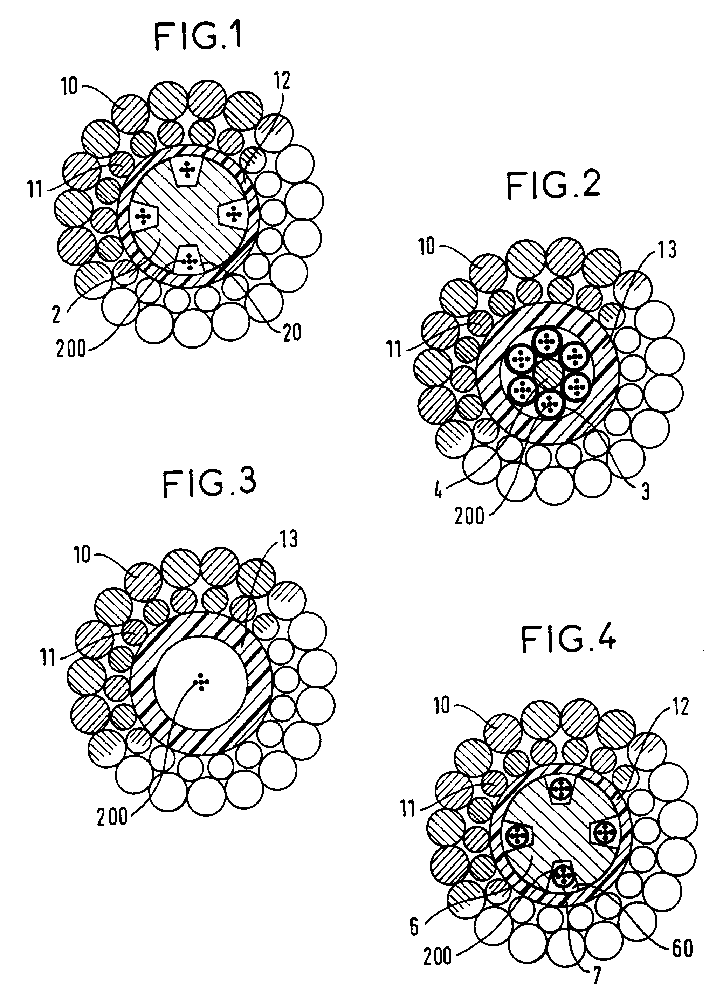

En référence aux figures 1 à 4, les câbles de garde optique comprennent typiquement une armure métallique périphérique et une âme optique centrale destinée à recevoir des fibres optiques. L'armure métallique est constituée d'une ou plusieurs couches d'armure superposées 10, 11 chacune formée par une pluralité de fils en métal ou alliage de métaux entourant l'âme optique. Chaque couche d'armure définit un enveloppe de forme cylindrique. Chaque fil métallique d'une couche est en contact intime avec deux fils voisins de cette même couche et est enroulé hélicoïdalement, concentrique à l'âme optique, ou bien autour de l'âme optique ou bien autour d'une couche d'armure inférieure dans le cas où ladite couche considérée n'est pas la couche la plus intérieure. Dans les figures 1 à 4, sont prévues deux couches d'armure 10 et 11 dont les fils sont par exemple en acier pour la couche intérieure 10 et en aluminium pour la couche extérieure 1. Il doit néanmoins être noté que des métaux (ou alliages de métaux) différents de ceux précités peuvent être utilisés, et qu'une seule couche ou plus de deux couches d'armure peuvent être prévues. Différentes structures peuvent être envisagées pour l'âme optique, telles que structure à jonc rainuré (FIG.1), structure multitube (FIG.2), structure monotube (FIG.3) et structure à jonc rainuré à tubes câblés (FIG.4). Dans la structure à jonc rainuré, l'âme optique, centrale au câble, comprend un jonc rainuré sous la forme d'un élément cylindrique allongé 2 à la périphérie duquel sont formées longitudinalement des rainures hélicoïdales 20 destinées chacune à recevoir un groupe respectif de fibres optiques 200. Le jonc rainuré peut être entouré par une gaine de protection périphérique 12. Un tel jonc rainuré peut être fabriqué en matériau plastique, typiquement thermoplastique, ou en métal, en particulier aluminium. Dans la structure multitube selon la figure 2, l'âme optique se compose d'un élément de renfort cylindrique central 4, d'une pluralité de tubes câblés 3 renfermant chacun un groupe respectif de fibres optiques 200 et d'un tube de maintien 13. A partir du centre de l'âme vers sa périphérie, peuvent être distingués radialement successivement l'élément de renfort 4, les tubes câblés 3 et le tube de maintien 13. Les tubes câblés 3 sont maintenus sans jeu entre l'élément de renfort 4 et le tube de maintien 4, et chacun d'eux peut être parallèle à l'élément de renfort ou être enroulé en hélice autour de cet élément de renfort 4. Typiquement, les tubes câblés sont en matériau plastique et le tube de maintien peut être fabriqué ou bien en matériau plastique, ou bien en métal ou alliage de métaux. Dans la structure monotube, l'âme optique est constituée uniquement par un tube de maintien 13 à l'intérieur duquel est disposé un groupe de fibres optiques. Comme précédemment, le tube de maintien 13 peut être fabriqué ou bien en matériau plastique, ou bien en métal ou alliage de métaux. Enfin, en ce qui concerne la structure à jonc rainuré à tubes câblés selon la figure 4, l'âme optique comprend un jonc rainuré 6 sous la forme d'un élément cylindrique allongé à la périphérie duquel sont formées longitudinalement des rainures typiquement hélicoïdales 60. Chaque rainure 60 reçoit un tube câblé 7 renfermant un groupe respectif de fibres optiques 200. Une gaine 12 peut être prévue pour entourer le jonc rainuré 6. Le jonc 6 peut être fabriqué ou bien en plastique ou bien en métal ou alliage de métaux. Les tubes câblés 7 sont typiquement en matériau plastique, ou thermodurcissables.

Comme signalé dans le préambule de la présente description, les techniques existantes de marquage d'informations sur des câbles ne peuvent être appliquées à des câbles de garde en raison notamment, d'une part, de la constitution de l'enveloppe la plus extérieure de ces câbles, à savoir une armure de fils métalliques enroulés en hélice et, d'autre part, des conditions d'environnement auxquels sont sujets ces câbles aériens. Pour ces raisons, il est prévu selon l'invention que l'information de marquage soit inscrite sur une portion de surface d'un élément du câble qui est intérieure à cette enveloppe extérieure constitutive du câble qui est sous la forme d'une couche d'armure métallique 10.

De préférence, selon des variantes principales de l'invention, l'information de marquage est inscrite sur une portion de surface d'un élément faisant partie de l'âme optique. Il est rappelé que des informations de marquage doivent être inscrites à intervalles réguliers sur toute la longueur du câble, en des points relativement faiblement espacés entre eux.

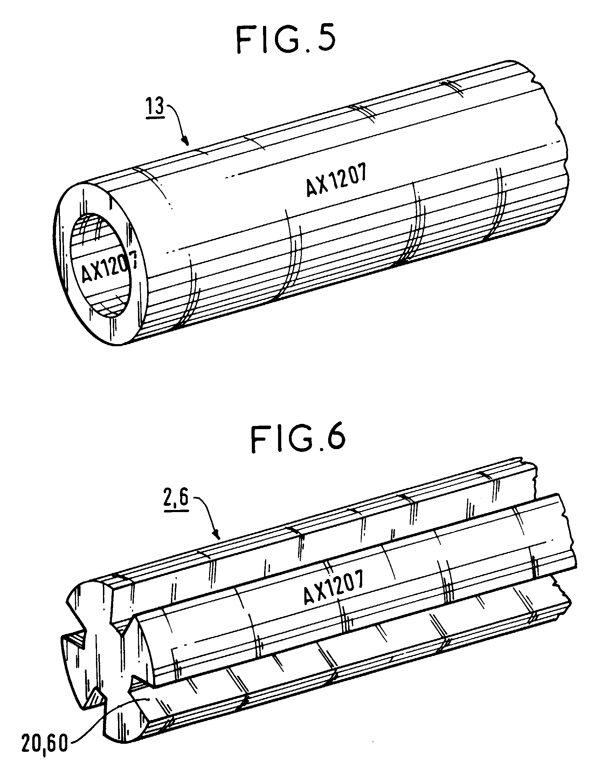

Comme illustré dans la figure 5, pour les structures de câble de garde optique comprenant ou bien une âme optique à structure multitube (FIG.2) sous la forme d'un tube de maintien incluant une pluralité de tubes câblés 3 renfermant chacun un groupe respectif de fibres optiques 200, ou bien une âme optique à structure monotube (FIG.3) sous la forme d'un tube de maintien 13 renfermant un groupe de fibres optiques 200, il est prévu selon l'invention que l'information de marquage, ici notée AX1207, soit inscrite sur la surface intérieure ou extérieure du tube de maintien 13. Pour l'âme optique à structure multitube (FIG.2), il peut, en variante, être prévu que l'information de marquage soit inscrite sur la surface d'au moins l'un des tubes câblés 3.

Comme montré dans la figure 6, pour un câble de garde optique comprenant ou bien une âme optique à structure à jonc rainuré (FIG.1), ou bien une âme optique à structure à jonc rainuré avec tubes câblés (FIG.4), sous la forme d'un jonc rainuré 6 dans des rainures 60 duquel sont disposés des tubes câblés 7 renfermant chacun un groupe respectif de fibres optiques 200, l'invention prévoit que l'information de marquage soit par exemple inscrite sur la surface du jonc rainuré, typiquement sur la surface saillante d'une ailette ou dans le creux formée par une rainure. Selon une autre alternative, il peut être prévu d'insérer, lors de la fabrication du câble, une bande marquée, par exemple synthétique, dans le fond d'une rainure. En variante, pour un câble ayant une âme optique à structure à jonc rainuré avec tubes câblés (FIG.4), l'information de marquage peut être inscrite sur la surface d'au moins l'un des tubes câblés.

Bien que l'on se soit limité dans les réalisations qui précèdent à prévoir l'inscription de l'information de marquage inscrite sur une portion de surface d'un élément faisant partie de l'âme optique du câble de garde, cette information de marquage peut néanmoins, selon une variante secondaire de l'invention, être inscrite sur la surface d'une des couches d'armure 11 qui est intérieure à la couche d'armure 10 formant l'enveloppe extérieure.

Les variantes de l'invention données ci-dessus ne sont pas limitatives, et l'homme du métier peut envisager d'autres solutions sans sortir du cadre de l'invention qui prévoit que cette information de marquage est inscrite sur une portion de surface d'un élément du câble qui est intérieure à une enveloppe extérieure constitutive du câble. L'invention se distingue de la technique antérieure notamment en ce que l'information de marquage inscrite n'est pas visible directement et nécessite l'ouverture du câble, ce qui est écarté dans les réalisations connues.

Typiquement, l'information de marquage est inscrite par une technique de jet d'encre. Elle peut consister en des caractères alphanumériques mais également en des codes à barres ou tout autre code. Bien entendu, les opérations de marquage selon l'invention sont réalisées au cours de la fabrication du câble de garde. Par exemple, pour une âme optique à structure monotube du type montré dans la figure 3, et en considérant que le tube est en métal, par exemple aluminium, l'inscription de l'information de marquage à l'intérieur du tube final 13 doit être réalisée avant que le tube ne soit formé par mise en forme d'une bande de métal et soudure longitudinale. L'inscription s'opère donc sur la bande de métal avant sa formation en tube.

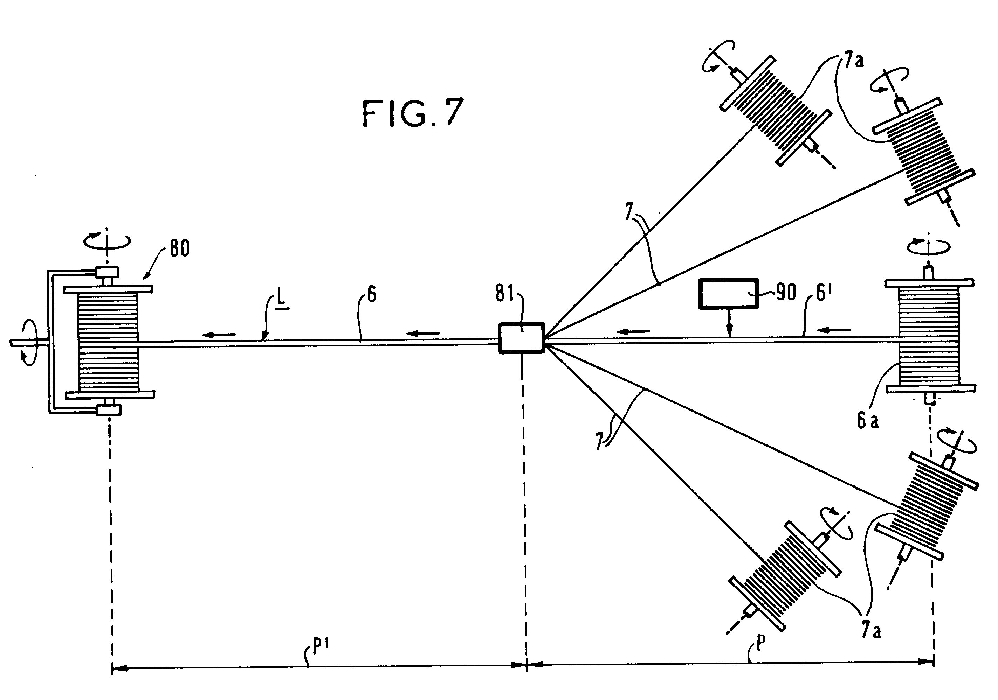

Une difficulté particulière apparaît dans l'inscription de l'information de marquage sur la surface d'un jonc rainuré 2, 6 en métal pour des câbles de garde optique du type montré dans les figures 1 et 4. Dans ce cas en effet, en gardant à l'esprit que des informations de marquage doivent être inscrites à intervalles réguliers sur toute la longueur du câble, il résulte une impossibilité d'inscription, par exemple par jet d'encre, sur la surface du jonc à rainures hélicoïdales en défilement car cette surface présente des ruptures de continuité de surface dues précisément au caractère hélicoïdal des rainures. L'invention remédie à ce problème particulier en fournissant un procédé de marquage des joncs rainurés mis en oeuvre lors de la fabrication des câbles de garde. Un système pour la mise en oeuvre du procédé est montré à la figure 7. Il comprend un dispositif 6a d'alimentation en jonc rainuré droit 6', N=2 dispositifs 7a d'alimentation en tube câblé 7 (FIG.4), un dispositif 80 de traction en rotation du jonc rainuré droit 6', un élément 81 de blocage en rotation du jonc et un dispositif d'inscription d'information de marquage 90, par exemple par jet d'encre.

Le jonc rainuré droit 6' est tel que les rainures qui y sont formées sur sa surface sont rectilignes et non hélicoïdales. Le dispositif 80 tire en rotation, le long d'une ligne de défilement L, le jonc rainuré droit 6' afin de le vriller en un jonc rainuré en hélice. Il est néanmoins prévu, grâce à l'élément 81, un blocage en rotation du jonc rainuré droit 6' en un point de la ligne de défilement qui est distant du point d'alimentation du jonc rainuré droit associé au dispositif 6a. Ainsi, sur une portion de longueur P du jonc rainuré défilant séparant l'élément 81 et le dispositif 6a, les rainures sont maintenues rectilignes, tandis que sur une portion P' séparant l'élément 81 du dispositif de traction en rotation 80, les rainures sont formées en hélice. Dans ces conditions, il est donc possible d'inscrire une information de marquage au jet d'encre sur la surface du jonc rainuré droit 6', par exemple sur la surface saillante d'une ailette ou dans le creux d'une rainure, en un point d'inscription compris entre l'élément 81 et le dispositif d'alimentation en jonc rainuré droit 6a.

## Revendications

1. Procédé de caractérisation d'un câble par des informations de marquage, **caractérisé par** une inscription desdites informations sur une portion de surface d'un élément du câble qui est intérieure à une enveloppe extérieure (10) constitutive dudit câble, lors de la fabrication dudit câble, de sorte à protéger lesdites informations ainsi inscrites contre l'environnement extérieur.

2. Procédé selon la revendication 1, ledit câble étant un câble de garde comprenant une âme optique incluant un jonc rainuré hélicoïdal (6), caractérisé par les étapes de:
- traction en rotation (80), le long d'une ligne de défilement (L), d'un jonc rainuré droit (6') afin de vriller ledit jonc rainuré droit (6') en un jonc rainuré hélicoïdal (6),
- blocage en rotation (81) dudit jonc rainuré droit (6') en un point donné de ladite ligne de défilement (L) qui est distant d'un point d'alimentation (6a) du jonc rainuré droit (6'), et
- inscription (90) d'une information de marquage sur la surface dudit jonc rainuré droit (6') en un point d'inscription compris entre ledit point donné et ledit point d'alimentation.

3. Procédé selon l'une des revendications 1 ou 2, caractérisé par une inscription desdites informations par jet d'encre.

4. Câble de garde optique comprenant une âme optique et une enveloppe extérieure (10) sous forme d'une couche d'armure métallique, ledit câble portant une information de marquage destinée à indiquer des caractéristiques du câble, **caractérisé en ce que** ladite information de marquage est inscrite sur une portion de surface d'un élément du câble qui est intérieure à ladite enveloppe extérieure (10).

5. Câble selon la revendication 4, caractérisé en ce que ladite information de marquage est inscrite sur une portion de surface d'un élément faisant partie de ladite âme optique.

6. Câble selon la revendication 4 comprenant une âme optique à structure à jonc rainuré (2), **caractérisé en ce que** ladite information de marquage est inscrite sur la surface dudit jonc rainuré.

7. Câble selon la revendication 6 comprenant une âme optique à structure à jonc rainuré avec tubes câblés, sous la forme d'un jonc rainuré (6) dans des rainures (60) duquel sont disposés des tubes câblés (7) renfermant chacun un groupe respectif de fibres optiques (200).

8. Câble selon la revendication 4 comprenant une âme optique à structure à jonc rainuré (2), **caractérisé en ce que** caractérisé en ce que ladite information de marquage est inscrite sur une bande qui est insérée dans une rainure dudit jonc.

9. Câble selon la revendication 4 comprenant une âme optique à structure multitube sous la forme d'un tube de maintien (13) incluant une pluralité de tubes câblés (3) renfermant chacun un groupe respectif de fibres optiques (200), **caractérisé en ce que** ladite information de marquage est inscrite sur la surface d'au moins l'un desdits tubes câblés (3).

10. Câble selon la revendication 4 comprenant une âme optique à structure multitube sous la forme d'un tube de maintien (13) incluant une pluralité de tubes câblés (3) renfermant chacun un groupe respectif de fibres optiques (200), **caractérisé en ce que** ladite information de marquage est inscrite sur la surface intérieure ou extérieure dudit tube de maintien (3).

11. Câble selon la revendication 4 comprenant une âme optique à structure monotube sous la forme d'un tube (13) renfermant un groupe de fibres optiques (200), **caractérisé en ce que** ladite information de marquage est inscrite sur la surface intérieure ou extérieure dudit tube de maintien.

12. Câble selon la revendication 4 comprenant une âme optique à structure à jonc rainuré avec tubes câblés, sous la forme d'un jonc rainuré (6) dans des rainures duquel sont disposés des tubes câblés (7) renfermant chacun un groupe respectif de fibres optiques (200), **caractérisé en ce que** ladite information de marquage est inscrite sur la surface d'au moins l'un desdits tubes câblés (7).

13. Câble selon la revendication 4 comprenant au moins deux couches d'armure métallique (10, 11), **caractérisé en ce que** ladite information de marquage est inscrite sur la surface d'une desdites couches d'armure (11) qui est intérieure à la couche d'armure (10) formant l'enveloppe extérieure.
